# EUROPEAN PATENT SPECIFICATION

(11) **EP 3 685 670 B1**
(45) Date of publication and mention of the grant of the patent: **05.01.2022**
(21) Application number: 20153205.8
(22) Date of filing: 22.01.2020
(51) Int. Cl.: A21D 13/066, A21D 13/41, A21D 13/43, A21D 13/045, A21D 13/062, A21D 2/26, A21D 2/36, A21D 2/18

(54) **METHOD FOR PREPARING GLUTEN-FREE BAKERY FOOD PRODUCTS**
VERFAHREN ZUR HERSTELLUNG VON GLUTENFREIEN BACKWAREN
PROCÉDÉ DE PRÉPARATION DE PRODUITS ALIMENTAIRES DE BOULANGERIE SANS GLUTEN

(30) Priority: 23.01.2019 IT 201900001031
(43) Date of publication of application: 29.07.2020
(73) Proprietor: Expoterra S.r.l., 41012 Carpi (MO) (IT)
(72) Inventor: DE STEFANO, Cesare, Modena (IT)
(74) Representative: Crugnola, Pietro

(56) References cited:
- DE-A1-102008 064 423
- US-A- 3 930 055
- US-A1- 2007 172 575
- US-B1- 7 595 081
- Anonymous: "Low-Carb Protein Pizza - Andréa's Protein Cakery", , 15 August 2015 (2015-08-15), pages 1-4, XP055620603, Retrieved from the Internet: URL:http://www.proteincakery.com/low-carb- protein-pizza/ [retrieved on 2019-09-10]

## Description

The invention relates to a method for preparing gluten-free bakery food products, as well as bakery food products that can be prepared by the aforesaid method.

Gluten is a protein complex that is insoluble in water, consisting of vegetable proteins (prolamines and glutelins) contained in cereals (for example, in wheat, rye, spelt and barley). From the clinical point of view, food intake of gluten can cause pathological phenomena that range from a simple reaction of sensitivity to gluten - the symptoms of which can comprise digestive, cutaneous, articular and neurological disorders - up to celiac disease proper, which is a chronic inflammation of the small intestine on autoimmune basis. Celiac disease has extremely variable symptoms and, if not treated, can lead to serious complications.

In order to face suitably the nutritional problems connected with celiac disease, various types of gluten-free food products have been formulated and marketed, including bakery food products.

Nevertheless, known gluten-free food products often have a glycaemic index (property of carbohydrates to raise the blood sugar level) that is higher than the corresponding gluten-containing food products. The aforesaid food products, whilst being suitable theoretically for being consumed by individuals suffering from celiac disease, could thus alter the glucose metabolism in those who consume them in the diet (Dickey W., Kearny N. "Overweight in celiac disease: prevalence, clinical characteristics, and effect of a gluten-free diet" Am. J. Gastroenterol. 2006; 101:2356-9). Anonymous: "Low-Carb Protein Pizza - Andréa's Protein Cakery",, 15 August 2015 Retrieved from the Internet:URL:http://www.proteincakery.com/low-carb-protein-pizza/ discloses low-carb gluten-free protein pizza comprising egg whites, pea protein powder, psyllium husk.

A further drawback of known gluten-free food products is that the latter, in addition to containing ingredients with a high glycaemic index (such as for example simple sugars, rice flour and maize flour), can be hypercaloric. This is due to a high percent content of carbohydrates and/or fats.

Known gluten-free food products can thus have an undesired fattening effect and, accordingly, can predispose the organism to the development of type 2 diabetes. In particular, the excess of visceral fat causes the formation of obese adipocytes and the death thereof on an inflammatory basis (so-called pyroptosis), with resulting enzyme activation of inflammatory cytokines. The latter, in turn, interfere with the insulin receptor, causing the onset of type 2 diabetes (Giordano A., Cinti S. et al "Obese adipocytes show ultrastructural features of stressed cells and die of pyroptosis", Journal of Lipid Research, 2013).

Among consumers and skilled persons (physicians and nutritionists), a strong need is thus felt for gluten-free food products, for example bakery food products, that are also hypocaloric and with a low glycaemic index.

An object of the invention is to improve known methods for preparing gluten-free food products, in particular bakery food products.

Another object is to make available a method for producing a food product, in particular a bakery food product, which is at the same time gluten-free, hypocaloric and with a low glycaemic index.

A further object is to make available gluten-free bakery food products that are at the same time hypocaloric and have a low glycaemic index.

According to the invention a method is provided for producing a gluten-free bakery food product, as defined in claim 1.

Owing to the invention, the aforesaid objects are achieved, inasmuch as the Inventor has devised a method by means of which it is possible to prepare a plurality of bakery food products (such as for example: bread, flatbread, pizza and snacks) that are free of gluten and ingredients having a high glycaemic index, in particular bakery food products having a content of digestible carbohydrates that is less than 1% by weight. Therefore, the invention makes bakery food products available that are suitable for a gluten-free and hypocaloric diet, in particular bakery food products that are gluten-free and suitable for a diet with a reduced content of carbohydrates.

In the context of the present description and the attached claims:
- the expression "reduced content of digestible carbohydrates" refers to a content of digestible carbohydrates that is less than 1% by weight;
- the expression "reduced fat content" refers to a fat content that is approximately comprised between 4% by weight and 14% by weight;
- with reference to the processing of egg albumen, the expression "whipping until stiff' defines a procedure in which the albumen is whisked or beaten until it has a compact and non-runny consistency;
- the term "instantaneous yeast" and "chemical yeast" are considered to be synonyms and are used in a mutually interchangeable manner.

In the method according to the invention the following main steps can be identified:
- Whipping a pasteurized egg albumen until stiff, so as to obtain a first composition (consisting of the whipped pasteurized egg albumen);
- Leaving the aforesaid first composition to rest;
- Adding at least one leavening agent to the aforesaid first composition;
- Mixing a pasteurized egg yolk with a pea protein isolate, a spreadable fresh cheese (in particular, a spreadable fresh cheese that is lactose-free and has a reduced fat content) and a xanthan gum, so as to obtain a second composition;
- Leaving the aforesaid second composition to rest;
- Adding at least one flavouring agent to the second composition and further mixing the latter;
- Mixing the first and the second composition with one another, so as to obtain a mixture;
- Baking the mixture (for example, in an oven of known type).

The aforesaid mixture, after baking, can be used as such as bread, as salted flatbread (if the flavouring agent comprises, for example, salt) or as a cake (if the flavouring agent comprises a sweetening agent).

The pea protein isolate and the xanthan gum do not contain gluten and enable to prepare a mixture that is stable and has a suitable consistency. Given the absence of gluten, the bakery food products (for example, bread and cakes) that are obtainable by the method according to the invention are suitable for being consumed by individuals affected by celiac disease.

Moreover, by using a spreadable fresh cheese having a reduced content of fats and carbohydrates, the bakery food products obtained by the method according to the invention are substantially hypocaloric food products and thus suitable for dietary use.

As will be explained in greater detail in the Examples, the baked mixture can be used to prepare bakery food products other than bread, such as for example pizzas and snacks. From this it clearly emerges that the method according to the invention is particularly versatile, inasmuch as it enables food products to be obtained that are significantly different from one another.

By way of non-limiting example, the following are disclosed below: a procedure for preparing a bakery food product according to the invention, in the form of bread or cake (Example 1); a procedure for preparing a bakery food product according to the invention, in the form of pizza (Example 2); a procedure for preparing a bakery food product according to the invention, in the form of snack (Example 3).

### Example 1 - Procedure for preparing a bakery food product according to the invention, in the form of bread or cake

In Table 1 (set out below) the food ingredients are shown that are used for preparing a bread (or cake) by using the method according to the invention. The unit of measurement for the solid ingredients is the gram (g) and the unit of measurement for the liquid ingredients is the millilitre (ml):

**Table 1**

| **Food ingredient** | **Quantity** |
|---|---|
| Pasteurized egg albumen | 100 ml |
| Pasteurized egg yolk | 50 ml |
| Spreadable fresh cheese (lactose-free and with reduced fat content) | 30 g |
| Pea protein isolate | 50 g |
| Xanthan gum | 4 g |
| Flavouring agent | 20 g |
| Leavening agent | 4 g |

The spreadable fresh cheese is of the so-called "light" type, i.e. it has a reduced fat content. In particular, a spreadable fresh cheese can be used that is lactose-free and has a fat content approximately comprised between 4% by weight and 14% by weight. Lactose-free Philadelphia^{®} Light (Kraft) and/or lactose-free Fiocchi di Latte Vitasnella^{®} (Danone) can be for example used as a lactose-free spreadable fresh cheese. The use of a lactose-free cheese, in addition to reducing the total carbohydrate content in the bakery food product according to the invention, enables the latter to be consumed also by individuals with lactose intolerance.

The pea protein isolate is a suitable protein source, has a reduced content of digestible carbohydrates and is usable as gluten-free flour. For the purposes of the present invention, the content of digestible carbohydrates of a pea protein isolate can be considered as "reduced" when 50 g of the aforesaid isolate (quantity of the ingredient according to Table 1) contain up to 0.5 g of total carbohydrates. This means that 50 g of pea protein isolate contains from 0 g to 0.5 g of digestible carbohydrates. Alternatively to the pea protein isolate, it is possible (not part of the claimed invention) to use another protein isolate of known type, provided that it is gluten-free and has a substantially reduced content of digestible carbohydrates. 1200005be-EN.docx

The xanthan gum is a polysaccharide of known type, which is non-digestible and is used as a thickening and stabilizing agent. The xanthan gum, in the method according to the invention, contributes to making the mixture stable also in the absence of gluten. Alternatively to the xanthan gum, it is possible to use another non-digestible polysaccharide gum for food use, such as for example guar gum.

The flavouring agent comprises flavourings and/or spices and can be easily selected on the basis of the type of product that it is desired to prepare.

In the case of salted products such as bread (or salted flatbread), the flavouring agent comprises salt and/or other flavourings of known type such as, for example, sage, thyme, rosemary, paprika, turmeric, fennel seeds and/or curry.

In the case of sweet products, the flavouring agent comprises sweetening agents of known type, such as for example stevia, erythritol and/or xylitol.

The leavening agent comprises a chemical or instantaneous yeast. As a leavening agent, cream of tartar (potassium bitartrate or potassium hydrogen tartrate) can be for example used. The latter can be used alone or in combination with another chemical or instantaneous yeast of known type.

A procedure is disclosed below for preparing a bread (or a cake) by using the ingredients of Table 1.

100 ml of pasteurized egg albumen are poured into a first container made of a suitable material (for example, stainless steel) of food grade. The egg albumen is whipped until stiff (namely it is whisked or beaten until it has a compact and non-runny consistency) manually or by an electromechanical tool of known type (for example, an immersion blender), so as to obtain a first composition consisting of whipped pasteurized egg albumen. The first composition is left to rest for 2 minutes. After 2 minutes have elapsed, 4 g of leavening agent, for example cream of tartar, are added to the first composition.

In a second container made of a suitable material (for example, stainless steel) of food grade, 50 ml of pasteurized egg yolk are mixed for at least 30 seconds, manually or by an electromechanical tool of known type, with 30 g of spreadable fresh cheese that is lactose-free and has a reduced content of carbohydrates and fats (for example, lactose-free Philadelphia^{®} or lactose-free Fiocchi di Latte Vitasnella^{®}), 50 g of pea protein isolate and 4 g of xanthan gum.

In this manner, a second composition is obtained consisting of a mixture of pasteurized egg yolk, spreadable fresh cheese, pea protein isolate and xanthan gum. The second composition is left to rest for 2 minutes. After 2 minutes have elapsed, 20 g of (sweet or salted, on the basis of the type of bakery food product that it is desired to obtain) flavouring agent are added to the second composition and the latter is mixed for at least 1 minute, manually or by an electromechanical tool of known type.

The second composition is transferred from the second container to the first container, so as to bring the first composition and the second composition into reciprocal contact. The first and the second composition are mixed reciprocally for at least 1 minute, manually or by an electromechanical tool of known type, so as to obtain a mixture.

A quantity of mixture that is sufficient to form a circular layer (disc) having a diameter of about 8 cm is poured into a container that is suitable for baking, for example a baking pan of known type, In particular, by using the quantities of the various food ingredients disclosed previously, up to 8 discs of mixture can be formed, each having a diameter of about 8 cm.

The baking pan is then placed in a pre-heated to 180°C oven of known type, for example a kitchen oven. The mixture is then left in the oven for about 5 minutes. When baking is completed, the baked mixture is left to rest for 24 h and can then be consumed as bread or cake, depending on the type of flavouring agent used.

It should be noted that by using 30 g of a spreadable fresh cheese having a content of carbohydrates of about 14% (such as for example the aforementioned lactose-free Philadelphia^{®} cheese) a mixture is obtained containing about 1.1 g of carbohydrates. By subdividing the mixture thus obtained into 8 discs (diameter: about 8 cm), each disc of mixture - namely each single food product that can be obtained from the same mixture - has a content of digestible carbohydrates (taking account of the possible traces of carbohydrates that are contained in the pasteurized egg yolk) equal to about 0.4% by weight. The procedure disclosed above thus enables a bakery food product to be obtained that is gluten-free and with a content of digestible carbohydrates that is substantially less than 1% by weight.

### Example 2 - Procedure for preparing a bakery food product according to the invention, in the form of pizza

The same ingredients as those of Table 1 of Example 1 are used, by using as a flavouring agent salt and/or other flavourings that are compatible with the product (pizza) to be obtained. The procedure is the same as disclosed in Example 1 until the mixture is obtained.

In a container that is suitable for baking, for example a baking pan of known type, a quantity of mixture is poured that is sufficient to form a circular layer having a diameter of about 30 cm. The baking pan is then placed in a pre-heated to 180°C oven of known type, for example a kitchen oven. The mixture is then left in the oven for about 5 minutes. When baking is completed, the baked mixture is left to rest for 24 h and can be subsequently used as a base for pizza, namely placed in a baking pan, suitably seasoned (for example, by adding tomato sauce or grilled vegetables) and lastly placed in a pre-heated to 180°C oven for about 5 minutes. After baking, the pizza is ready to be consumed.

### Example 3 - Procedure for preparing a bakery food product according to the invention, in the form of snack

The same ingredients as those of Table 1 of Example 1 are used, by using as a flavouring agent flavourings that are compatible with the product (salted snack; sweet snack) to be obtained. The procedure is the same as disclosed in Example 1 until the mixture is obtained.

In a container that is suitable for baking, for example a baking pan of known type, a quantity of mixture is obtained that is sufficient to form a circular layer having a diameter of about 3 cm. The baking pan is then placed in a pre-heated to 180°C oven of known type, for example a kitchen oven. The mixture is then left in the oven for about 5 minutes. When baking is completed, the baked mixture is left to rest for 24 h and can be subsequently used as a basis for a snack, namely suitably flavoured with (salted or sweet) flavourings of known type and placed in a drying device of known type. A kitchen oven can be for example used as a drying device. The drying step is carried out at a temperature comprised between 50°C and 70°C for a time varying between 4 and 12 h on the basis of the desired degree of crunchiness. When drying is completed, the snack is taken out from the dryer and is left to rest for about 2 h before being consumed.

By way of example, it is noted that a chemical analysis carried out on a snack sample according to the invention gave a value of 0.59 g of digestible carbohydrates per 100 g of product. This confirms that the method according to the invention enables a bakery food product to be obtained having a reduced content of digestible carbohydrates, in particular a content of digestible carbohydrates that is less than 1% by weight.

## Claims

1. Method for preparing a bakery food product that is gluten-free and has a reduced content of digestible carbohydrates, said content of digestible carbohydrates being less than 1% by weight, said method comprising the following steps:
- Whipping a pasteurized egg albumen until stiff, so as to obtain a first composition consisting of said whipped pasteurized egg albumen;
- Leaving said first composition to rest;
- Adding at least one leavening agent to said first composition;
- Mixing a pasteurized egg yolk with a pea protein isolate having a reduced content of digestible carbohydrates, wherein 50 g of said pea protein isolate contain from 0 g to 0.5 g of digestible carbohydrates, a spreadable fresh cheese and a xanthan gum, said spreadable fresh cheese being lactose-free and having a reduced fat content, so as to obtain a second composition;
- Leaving said second composition to rest;
- Adding at least one flavouring agent to said second composition and further mixing said second composition;
- Mixing said first composition with said second composition, so as to obtain a mixture;
- Baking said mixture, so as to obtain said bakery food product.

2. Method according to claim 1, comprising using 100 ml of said pasteurized egg albumen.

3. Method according to claim 1, or 2, comprising using 4 g of said leavening agent.

4. Method according to any one of claims 1 to 3, comprising using 50 ml of said pasteurized egg yolk.

5. Method according to any one of claims 1 to 4, comprising using 50 g of said pea protein isolate.

6. Method according to any one of claims 1 to 5, comprising using 30 g of said spreadable fresh cheese.

7. Method according to any one of claims 1 to 6, comprising using 4 g of said xanthan gum.

8. Method according to any one of claims 1 to 7, comprising using 20 g of said flavouring agent.

9. Method according to any one of claims 1 to 8, wherein said leaving said first composition to rest and said leaving said second composition to rest lasts for a time of at least 2 minutes.

10. Method according to any one of claims 1 to 9, wherein said reduced fat content of said spreadable fresh cheese is comprised between 4% by weight and 14% by weight.

## Patentansprüche

1. Verfahren zur Herstellung eines Backwaren-Nahrungsmittelprodukts, das glutenfrei ist und einen reduzierten Gehalt an verdaulichen Kohlenhydraten aufweist, wobei der Gehalt an verdaulichen Kohlenhydraten weniger als 1 Gew.-% beträgt, wobei das Verfahren die folgenden Schritte umfasst:
- Aufschlagen eines pasteurisierten Eiweißes, bis es steif ist, um eine erste Zusammensetzung zu erhalten, die aus dem aufgeschlagenen pasteurisierten Eiweiß besteht;
- Ruhenlassen der ersten Zusammensetzung;
- Zugabe von mindestens einem Triebmittel zu der ersten Zusammensetzung;
- Mischen eines pasteurisierten Eigelbs mit einem Erbsenproteinisolat mit einem reduzierten Gehalt an verdaulichen Kohlenhydraten, wobei 50 g des Erbsenproteinisolats 0 g bis 0,5 g verdauliche Kohlenhydrate enthalten, einem streichfähigen Frischkäse und einem Xanthangummi, wobei der streichfähige Frischkäse laktosefrei ist und einen reduzierten Fettgehalt aufweist, um eine zweite Zusammensetzung zu erhalten;
- Ruhenlassen der zweiten Zusammensetzung;
- Hinzufügen von mindestens einem Aromastoff zu der zweiten Zusammensetzung und weiteres Mischen der zweiten Zusammensetzung;
- Mischen der ersten Zusammensetzung mit der zweiten Zusammensetzung, um eine Mischung zu erhalten;
- Backen der Mischung, um das Backwaren-Nahrungsmittelprodukt zu erhalten.

2. Verfahren nach Anspruch 1, aufweisend die Verwendung von 100 ml des pasteurisierten Eiweißes.

3. Verfahren nach Anspruch 1 oder 2, aufweisend die Verwendung von 4 g des Triebmittels.

4. Verfahren nach einem der Ansprüche 1 bis 3, aufweisend die Verwendung von 50 ml des pasteurisierten Eigelbs.

5. Verfahren nach einem der Ansprüche 1 bis 4, aufweisend die Verwendung von 50 g des Erbsenproteinisolats.

6. Verfahren nach einem der Ansprüche 1 bis 5, aufweisend die Verwendung von 30 g des streichfähigen Frischkäses.

7. Verfahren nach einem der Ansprüche 1 bis 6, umfassend die Verwendung von 4 g des Xanthangummis.

8. Verfahren nach einem der Ansprüche 1 bis 7, umfassend die Verwendung von 20 g des Aromastoffs.

9. Verfahren nach einem der Ansprüche 1 bis 8, wobei das Ruhenlassen der ersten Zusammensetzung und das Ruhenlassen der zweiten Zusammensetzung für eine Zeit von mindestens 2 Minuten andauert.

10. Verfahren nach einem der Ansprüche 1 bis 9, wobei der reduzierte Fettgehalt des streichfähigen Frischkäses zwischen 4 Gew.-% und 14 Gew.-% liegt.

## Revendications

1. Procédé pour préparer un produit alimentaire de boulangerie qui est sans gluten et a une teneur réduite en glucides digestibles, ladite teneur en glucides digestibles étant inférieure à 1 % en poids, ledit procédé comprenant les étapes suivantes :
- battre en neige ferme un blanc d'œuf pasteurisé, de manière à obtenir une première composition consistant en ledit blanc d'œuf pasteurisé battu ;
- laisser ladite première composition reposer ;
- ajouter au moins un agent levant à ladite première composition ;
- mélanger un jaune d'œuf pasteurisé à un isolat de protéine de pois ayant une teneur réduite en glucides digestibles, dans lequel 50 g dudit isolat de protéine de pois contiennent de 0 g à 0,5 g de glucides digestibles, un fromage frais tartinable et une gomme de xanthane, ledit fromage frais tartinable étant sans lactose et ayant une teneur réduite en graisse, de manière à obtenir une deuxième composition ;
- laisser ladite deuxième composition reposer ;
- ajouter au moins un agent aromatisant à ladite deuxième composition et mélanger encore ladite deuxième composition ;
- mélanger ladite première composition à ladite deuxième composition, de manière à obtenir un mélange ;
- faire cuire au four ledit mélange, de manière à obtenir ledit produit alimentaire de boulangerie.

2. Procédé selon la revendication 1, comprenant l'étape d'utiliser 100 ml dudit blanc d'œuf pasteurisé.

3. Procédé selon la revendication 1, ou 2, comprenant l'étape d'utiliser 4 g dudit agent levant.

4. Procédé selon l'une quelconque des revendications 1 à 3, comprenant l'étape d'utiliser 50 ml dudit jaune d'œuf pasteurisé.

5. Procédé selon l'une quelconque des revendications 1 à 4, comprenant l'étape d'utiliser 50 g dudit isolat de protéine de pois.

6. Procédé selon l'une quelconque des revendications 1 à 5, comprenant l'étape d'utiliser 30 g dudit fromage frais tartinable.

7. Procédé selon l'une quelconque des revendications 1 à 6, comprenant l'étape d'utiliser 4 g de ladite gomme de xanthane.

8. Procédé selon l'une quelconque des revendications 1 à 7, comprenant l'étape d'utiliser 20 g dudit agent aromatisant.

9. Procédé selon l'une quelconque des revendications 1 à 8, dans lequel ladite étape de laisser ladite première composition reposer et ladite étape de laisser ladite deuxième composition reposer dure au moins 2 minutes.

10. Procédé selon l'une quelconque des revendications 1 à 9, dans lequel ladite teneur réduite en graisse dudit fromage frais tartinable est comprise entre 4 % en poids et 14 % en poids.
